# EUROPEAN PATENT APPLICATION

(11) **EP 0 637 690 A1**
(43) Date of publication of application: **08.02.1995**
(21) Application number: 94107380.1
(22) Date of filing: 11.05.1994
(51) Int. Cl.: F04B 53/14

(54) **Plunger pump**

(30) Priority: 14.05.1993 JP 112773/93
(71) Applicant: SUMITOMO ELECTRIC INDUSTRIES, LIMITED, Osaka 541 (JP)
(72) Inventor: Nokubo, Seiji, c/o Itami Works of Sumitomo, Itami-shi, Hyogo (JP); Kohno, Teruhisa, c/o Itami Works of Sumitomo, Itami-shi, Hyogo (JP)
(74) Representative: Eder, Thomas, Dr.-Ing.

(57) **Abstract**

A retainer is mounted on the tip of a plunger disposed in the pressure chamber to support the spring for closing the suction valve. Since a spring for closing a suction valve is supported by the retainer, the stroke of the plunger will not affect the load applied to the spring. Thus, the suction valve can be opened under a low pressure even if the spring force of the spring is weak. This will improve the response characteristic and the suction efficiency.

## Description

This invention relates to a plunger pump used as a fluid pressure source for a fluid pressure control unit or the like.

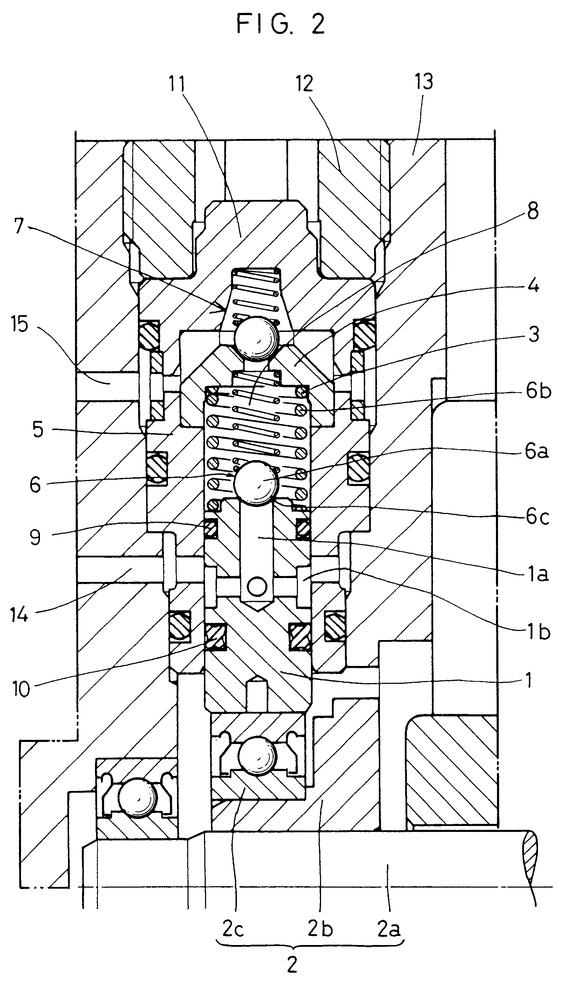

Fig. 2 shows one example of a conventional plunger pump used in a brake fluid pressure control unit for automobile.

In the figure, numeral 1 designates a plunger having a suction passage 1a for a fluid. A plunger driving member 2 comprises a driving shaft 2a provided with an eccentric cam 2b and a bearing 2c mounted on the cam 2b. The plunger pump further comprises a return spring 3, a holder 4, a plunger case 5, a suction valve 6, a discharge valve 7, a pressure chamber 8 provided between the plunger 1 and the holder 4 and the plunger case 5, a seal 9 for sealing the outer periphery of the plunger 1 between an annular groove 1b on the outer periphery of the plunger, which serves as an inlet port of the suction passage 1a, and the pressure chamber 8, a seal 10 for sealing the outer periphery of the plunger 1 at its end open to the air, an end plug 11 coupled to the rear end of the plunger case 5 with a seal on its outer periphery, and a plug screw 12 for securing the plunger case 5, the holder 4 and the end plug 11 to a unit housing 13.

The plunger 1 has one end disposed in the pressure chamber 8 and the other end open to the air and protruding out of the plunger case 5. It is pressed against the outer periphery of the bearing 2c by the return spring 3. In this plunger pump, the driving shaft 2a is rotated to move or reciprocate the plunger 1 up and down, so that the fluid introduced from a suction port 14 is compressed in the pressure chamber 8 and discharged through a discharge port 15.

In such a conventional plunger pump, a valve body 6a of the suction valve 6 is pressed against a valve seat 6c formed at the tip of the plunger 6 by a spring 6b for closing the valve.

In this structure, the spring 6b is compressed with the stroke of the plunger 1. When the plunger 1 is at its top dead point (where suction is started), the force of the spring 6b becomes maximum. Therefore, when sucking, the response of the suction valve (for opening it) is delayed, which unduly affects the suction efficiency.

It is an object of the present invention to provide a plunger pump having a suction valve reliably opened under a low pressure and having an improved suction efficiency.

According to the present invention, there is provided a plunger pump comprising a pump body having a suction port and a discharge port, a plunger having one end disposed in a pressure chamber and the other end open to the air, the plunger being formed with a suction passage leading from the suction port to the pressure chamber, a suction valve having a valve body and a valve seat formed on the tip of the plunger where an outlet port of the suction passage is open, a return spring for the plunger, and a spring for closing the suction valve by pressing the valve body against the valve seat, the return spring, the valve body and the spring for closing the valve being provided in the pressure chamber, characterized in that a retainer is mounted on the tip of the plunger to support the spring for closing the suction valve.

The retainer should preferably serve also to guide the inner periphery of the return spring and/or serve as a retainer for the seal, which will be described later.

In the present invention, since the spring for closing the suction valve is supported by the retainer which moves together with the plunger, the load applied on the spring will not vary with the stroke or position of the plunger. Thus, the spring for closing the valve and holding the valve body in its closed position may have a very weak spring force. Because the suction valve can open under a lower pressure than the conventional one, the suction efficiency will improve. This will improve the response characteristic for the suction to the pressure chamber and thus the suction efficiency.

Further, the movement of the plunger becomes stable since the inner periphery of the spring is guided by the retainer. Also, since the flange of the retainer can keep in position the seal on the outer periphery, the number of the grooves for receiving the seals can be reduced. It is advantageous in terms of stable performance and workability.

Other features and objects of the present invention will become apparent from the following description made with reference to the accompanying drawings, in which:
Fig. 1 is a sectional view showing one embodiment according to the present invention; and
Fig. 2 is a sectional view showing a conventional plunger pump.

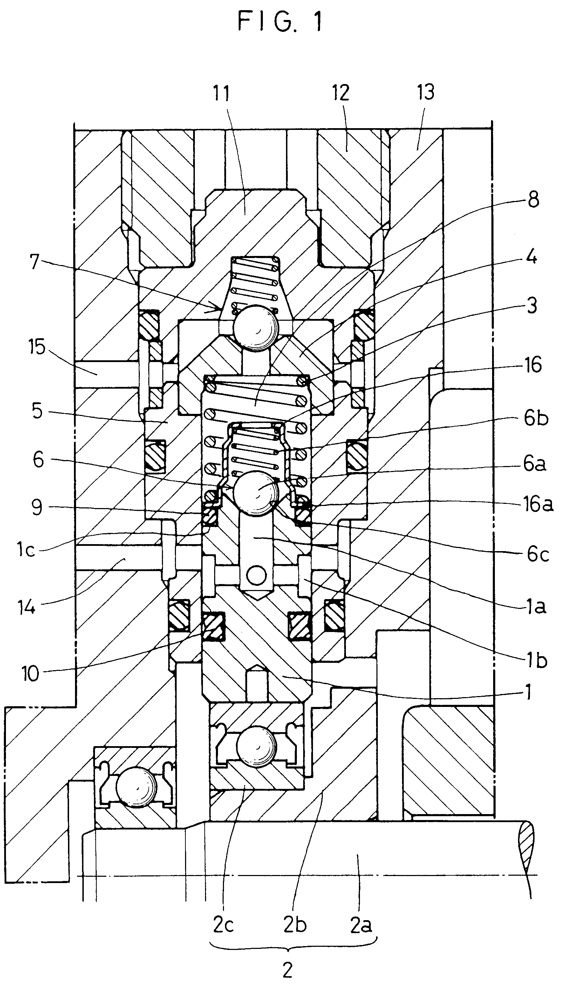

Numerals 1 - 15 in Fig. 1 denote like parts as in Fig. 2, and their description is omitted. Only the points different from Fig. 2 will be explained hereinafter.

As shown in Fig. 1, a retainer 16 which characterizes the present invention is mounted on the tip of the plunger 1 to support one end of the spring 6b for closing the valve. The retainer 16 is in the form of a cylinder having an outer diameter a little smaller than the inner diameter of the return spring 3. One end of the retainer 16 is concentrically fitted on the small-diameter portion which is formed on the tip of the plunger 1 for positioning. flange 16a, which is in contact with an end face of the plunger 1, is formed on the fixed end of the retainer 16 so as to receive one end of the return spring 3.

With this arrangement, disengagement of the retainer 16 is prevented by the force of the spring 3. Moreover, the expansion of the spring 3 becomes stable since its inner side is guided by the retainer 16.

Moreover, the seal 9 is disposed and held between a shoulder 1c formed on the top of the plunger 1 and the flange 16a. Thus, the plunger can be formed more easily than the conventional one.

## Claims

1. A plunger pump comprising a pump body having a suction port and a discharge port, a plunger having one end disposed in a pressure chamber and the other end open to the air, said plunger being formed with a suction passage leading from said suction port to said pressure chamber, a suction valve having a valve body and a valve seat formed on the tip of said plunger where an outlet port of said suction passage is open, a return spring for said plunger, and a spring for closing said suction valve by pressing said valve body against said valve seat, said return spring, said valve body and said spring for closing said valve being provided in said pressure chamber, characterized in that a retainer is mounted on the tip of said plunger to support said spring for closing said suction valve.

2. A plunger pump as claimed in claim 1 wherein said retainer is in the form of a cylinder and serves as a guide for the inner periphery of said return spring, wherein one end of said retainer is concentrically fitted on a small-diameter portion formed on the tip of said plunger, and wherein a flange formed on said one end of said retainer is pressed against the end face of said plunger by said return spring.

3. A plunger pump as claimed in claim 2 wherein a seal is provided for sealing the outer periphery of said plunger between an annular groove provided on the outer periphery of said plunger and said pressure chamber, and wherein said seal is held between a shoulder formed on a front portion of said plunger and said flange of said retainer.
